# EUROPÄISCHE PATENTANMELDUNG

(11) **EP 1 285 941 A1**
(43) Veröffentlichungstag der Anmeldung: **26.02.2003**
(21) Anmeldenummer: 02017760.6
(22) Anmeldetag: 09.08.2002
(51) Int. Cl.: C08G 65/26, D06P 1/613

(54) **Verwendung alkoxylierter Phenolderivate**

(30) Priorität: 21.08.2001 EP 01119630; 25.02.2002 DE 10207829
(71) Anmelder: Bayer Aktiengesellschaft, 51368 Leverkusen (DE)
(72) Erfinder: Meier, Helmut-Martin, Dr., 40883 Ratingen (DE); Knackmuss, Hans-Joachim, Prof. Dr., 71229 Leonberg (DE); Rieger, Paul-Gerhard, Dr., 70195 Stuttgart (DE)

(57) **Zusammenfassung**

Verbindungen der allgemeinen Formel (I) 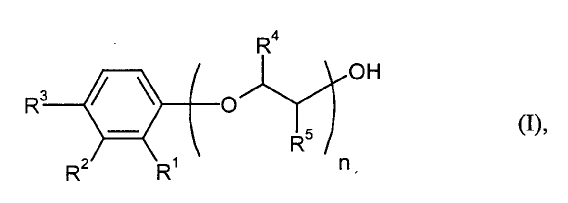 worin
R¹, R² und R³ unabhängig voneinander für Wasserstoff, Cyclohexyl oder Phenyl stehen, wobei wenigstens einer der Reste R¹ bis R³ ungleich Wasserstoff ist,
R⁴ und R⁵ unabhängig voneinander Methyl oder Wasserstoff bedeuten und
n eine Zahl von 21 bis 40 steht,
können als bioabbaubare Dispergatoren mit guten Dispergiereigenschaften für pharmazeutische und agrochemische Wirkstoffe eingesetzt werden.

## Beschreibung

Die Erfindung betrifft die Verwendung alkoxylierter Phenolderivate als Dispergiermittel für pharmazeutische oder agrochemische Wirkstoffe, pharmazeutische oder agrochemische Formulierungen enthaltend diese Dispergiermittel, deren Herstellung sowie deren Verwendung.

Dispergiermittel werden für viele Zwecke benötigt. So sind beispielsweise Dispersionsfarbstoffe in Wasser unlösliche oder schwerlösliche Verbindungen, die nicht ohne Anwendung eines Dispergiermittels zum Färben von Textilien benutzt werden können. In der Literatur sind zahlreiche Dispergiermittel beschrieben, die dazu eingesetzt werden können. Besonders wirksam haben sich dabei die Ligninsulfonate und Naphthalinsulfonate erwiesen, wie z.B. dokumentiert in Chwala/Anger Handbuch der Textilhilfsmittel, 1977, S. 501 ff.

Auch alkoxylierte Phenole sowie deren Derivate sind bereits für diesen Zweck zum Einsatz gekommen.

In FR-A-2 472 627 werden beispielsweise ethoxylierte Phenolderivate mit bis zu 20 Ethylenoxid (EO) Einheiten explizit offenbart (Beispiele 1, 2, 3 und 5).

Gemäß GB-A-20 50 438 wird explizit ethoxyliertes p-Phenylphenol mit 12 EO-Einheiten offenbart (Beispiel 8).

Aus US-A-4 328 220 werden ebenfalls ethoxylierte Phenolderivate mit 8 EO-Einheiten (Verbindung B 30, Sp. 9, Z. 9) explizit offenbart.

All diese alkoxylierten Phenolderivate weisen aber noch unzureichende Dispergierwirkungen auf.

In der noch nicht veröffentlichten deutschen Patentanmeldung mit dem Aktenzeichen DE 100 42 730.8 sind alkoxylierte Phenolderivate, ein Verfahren zu ihrer Herstellung sowie ihre Verwendung als Dispergiermittel im Färbeprozess von Textilien beschrieben.

Auch für pharmazeutische und agrochemische Formulierungen werden häufig geeignete Dispergiermittel benötigt. Insbesondere im Falle agrochemischer Formulierungen sollten diese Dispergiermittel über eine gute Umweltverträglichkeit verfügen.

Aufgabe der vorliegenden Erfindung war es daher, derartige Dispergiermittel zur Anwendung für pharmazeutische und agrochemische Formulierungen bereitzustellen.

Gegenstand der Erfindung ist die Verwendung von Verbindungen der allgemeinen Formel (I) 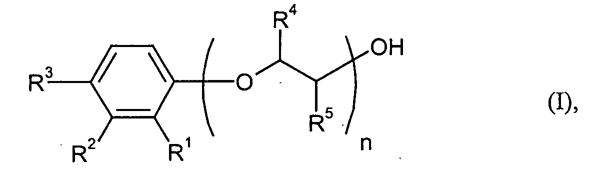 worin
- R¹, R² und R³: unabhängig voneinander für Wasserstoff, Cyclohexyl oder Phenyl stehen, wobei wenigstens einer der Reste R¹ bis R³ ungleich Wasserstoff ist,
- R⁴ und R⁵: unabhängig voneinander Methyl oder Wasserstoff bedeuten und
- n: für eine Zahl von 21 bis 40 steht
als Dispergiermittel für pharmazeutische und agrochemische Wirkstoffe.

R¹, R² und R³ können in der allgemeinen Formel (I) unabhängig voneinander für Wasserstoff, Cyclohexyl oder Phenyl stehen, wobei wenigstens einer der Reste R¹ bis R³ ungleich Wasserstoff ist. Sowohl der Cyclohexylrest als auch der Phenylrest können dabei auch substituiert sein.

Als mögliche Substituenten des Cyclohexylrestes kommen beispielsweise C₁-C₄-Alkyl, C₁-C₄-Alkoxy, Halogen, CN oder Nitro in Frage. Bevorzugt ist der Cyclohexylrest jedoch unsubstituiert.

Als mögliche Substituenten des Phenylrestes kommen beispielsweise C₁-C₄-Alkyl, C₁-C₄-Alkoxy, Halogen, CN oder NO₂ in Frage. Bevorzugt ist der Phenylrest aber unsubstituiert.

Bevorzugt bedeutet n eine Zahl von 26 bis 35, besonders bevorzugt ist n = 29 bis 31.

Als besonders bevorzugte Phenolreste der Formel 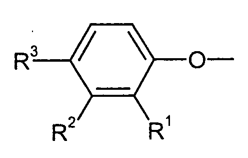 kommen beispielsweise solche in Frage, die sich von den entsprechenden Phenolen der Formel (II) ableiten, beispielsweise solche aus der Gruppe enthaltend o-Cyclohexylphenol, m-Cyclohexylphenol, p-Cyclohexylphenol, o-Phenylphenol, m-Phenylphenol und p-Phenylphenol. Besonders bevorzugt sind o- sowie p-Phenylphenol, insbesondere p-Phenylphenol.

Besonders bevorzugt steht R⁴ und R⁵ gemeinsam für Wasserstoff.

Ganz besonders bevorzugt ist die Verbindung der Formel 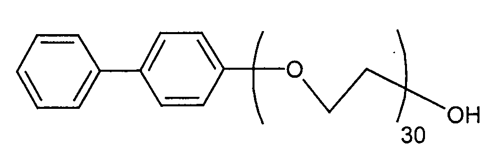 die ein sehr gutes Dispergiermittel darstellt und gleichzeitig leicht biologisch abbaubar ist.

Die erfindungsgemäß verwendeten Verbindungen der Formel (I) können hergestellt werden, indem man Phenole der Formel (II) 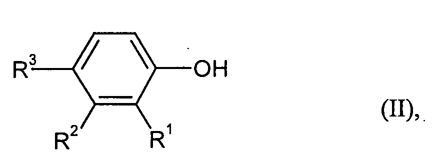 mit mol-Äquivalenten eines Alkylenoxides der Formel (III) 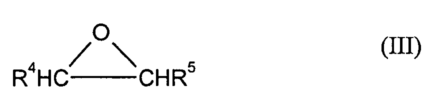 umsetzt.

Als Alkylenoxide der Formel (III) kommen vorzugsweise Ethylenoxid und/oder Propylenoxid, insbesondere Ethylenoxid in Frage.

Die Alkoxylierung erfolgt vorzugsweise in Gegenwart von Alkali- oder Erdalkalikatalysatoren, wobei diese bevorzugt in einer Menge von 0,1 bis 1 Gew.-%, bezogen auf das Phenolderivat der Formel (II), eingesetzt werden.

Als Verbindungen der Formel (II) sind besonders geeignet: o-Cyclohexylphenol, m-Cyclohexylphenol, p-Cyclohexylphenol, o-Phenylphenol, m-Phenylphenol und p-Phenylphenol.

Die Umsetzung der Phenolderivate der Formel (II) mit den Alkylenoxiden der Formel (III), insbesondere Ethylenoxid oder Propylenoxid, werden im Allgemeinen nach bekannten Verfahren durchgeführt und sind z.B. beschrieben in N. Schönfeldt, Grenzflächenaktive Ethylenoxid-Addukte, Stuttgart 1976.

Gegenstand der Erfindung sind darüberhinaus Formulierungen enthaltend
a) mindestens einen pharmazeutischen oder agrochemischen Wirkstoff,
b) mindestens eine Verbindung der allgemeinen Formel (I), wobei R¹, R², R³, R⁴ und R⁵ sowie n die für die allgemeine Formel (I) genannten Bedeutungen besitzen können und
c) gegebenenfalls weitere Zusatzstoffe

Weiterhin wurde gefunden, dass sich diese erfindungsgemäßen Formulierungen herstellen lassen, indem man
a) mindestens einen pharmazeutischen oder agrochemischen Wirkstoff
b) mit mindestens einer Verbindung der allgemeinen Formel (I) und
c) gegebenenfalls mit weiteren Zusatzstoffen vermischt.

Gefunden wurde darüberhinaus, dass sich die erfindungsgemäßen agrochemischen Formulierungen besonders gut zur Applikation enthaltener agrochemischer Wirkstoffe auf Pflanzen und/oder deren Lebensraum eignen.

Die erfindungsgemäßen Formulierungen enthalten mindestens einen pharmazeutischen oder agrochemischen Wirkstoff.

Unter agrochemischen Wirkstoffen sind hierbei alle zur Pflanzenbehandlung üblichen Substanzen zu verstehen. Vorzugsweise genannt seien Fungizide, Bakterizide, Insektizide, Akarizide, Nematizide, Herbizide, Pflanzenwuchsregulatoren, Pflanzennährstoffe und Repellents.

Als Beispiele für Fungizide seien genannt:
2-Aminobutan; 2-Anilino-4-methyl-6-cyclopropyl-pyrimidin; 2',6'-Dibromo-2-methyl-4'-trifluoromethoxy-4'-trifluoromethyl-1,3-thiazol-5-carboxanilid; 2,6-Dichloro-N-(4-trifluoromethylbenzyl)-benzamid; (E)-2-Methoximino-N-methyl-2-(2-phenoxyphenyl) acetamid; 8-Hydroxychinolinsulfat; Methyl-(E)-2-{2-[6-(2-cyanophenoxy)-pyrimidin-4-yloxy]-phenyl}-3-methoxyacrylat; Methyl-(E)-methoximino[alpha-(otolyloxy)-o-tolyl]-acetat; 2-Phenylphenol (OPP),
Aldimorph, Ampropylfos, Anilazin, Azaconazol,
Benalaxyl, Benodanil, Benomyl, Binapacryl, Biphenyl, Bitertanol, Blasticidin-S, Bromuconazole, Bupirimate, Buthiobate,
Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram,
Dichlorophen, Diclobutrazol, Dichlofluanid, Diclomezin, Dicloran, Diethofencarb, Difenoconazol, Dimethirimol, Dimethomorph, Diniconazol, Dinocap, Diphenylamin,
Dipyrithion, Ditalimfos, Dithianon, Dodine, Drazoxolon,
Edifenphos, Epoxyconazole, Ethirimol, Etridiazol,
Fenarimol, Fenbuconazole, Fenfuram, Fenitropan, Fenpiclonil, Fenpropidin, Fenpropimorph, Fentinacetat, Fentinhydroxyd, Ferbam, Ferimzone, Fluazinam, Fludioxonil, Fluoromide, Fluquinconazole, Flusilazole, Flusulfamide, Flutolanil, Flutriafol, Folpet, Fosetyl-Aluminium, Fthalide, Fuberidazol, Furalaxyl, Furmecyclox,
Guazatine,
Hexachlorobenzol, Hexaconazol, Hymexazol,
Imazalil, Imibenconazol, Iminoctadin, Iprobenfos (IBP), Iprodion, Isoprothiolan,
Kasugamycin, Mancozeb, Maneb, Mepanipyrim, Mepronil, Metalaxyl, Metconazol, Methasulfocarb, Methfuroxam, Metiram, Metsulfovax, Myclobutanil,
Nickeldimethyldithiocarbamat, Nitrothal-isopropyl, Nuarimol,
Ofurace, Oxadixyl, Oxamocarb, Oxycarboxin,
Pefurazoat, Penconazol, Pencycuron, Phosdiphen, Pimaricin, Piperalin, Polyoxin, Probenazol, Prochloraz, Procymidon, Propamocarb, Propiconazole, Propineb, Pyrazophos, Pyrifenox, Pyrimethanil, Pyroquilon,
Quintozen (PCNB),
Tebuconazol, Tecloftalam, Techazen, Tetraconazol, Thiabendazol, Thicyofen, Thiophanat-methyl, Thiram, Tolclophos-methyl, Tolylfluanid, Triadimefon, Triadimenol, Triazoxid, Trichlamid, Tricyclazol, Tridemorph, Triflumizol, Triforin, Triticonazol, Validamycin A, Vinclozolin,
Zineb, Ziram,
8-tert.-Butyl-2-(N-ethyl-N-n-propyl-amino)-methyl-1,4-dioxa-spiro-[4,5]decan, N-(R)-[1-(4-Chlorphenyl)-ethyl]-2,2-dichlor-1-ethyl-3t-methyl-1r-cyclopropancarbonsäureamid (Diastereomerengemisch oder einzelne Isomere),
[2-Methyl-1-[[[1-(4-methylphenyl)-ethyl]-amino]-carbonyl]-propyl]-carbaminsäure-1 -methylethylester,
1-Methyl-cyclohexyl-1-carbonsäure-(2,3-dichlor-4-hydroxy)-anilid,
2-[2-(1-Chlor-cyclopropyl)-3-(2-chlorphenyl)-2-hydroxypropyl]-2,4-dihydro-[1,2,4]-triazol-3-thion,
1-(3,5-Dimethyl-isoxazol-4-sulfonyl)-2-chlor-6,6-difluor-[1,3]-dioxolo-[4,5-f]-benzimidazol und
(5,6-Dihydro-1,4,2-dioxazin-3-yl)- {2-[[6-(2-chlor-phenoxy)-5-fluor-4-pyrimidinyl]-oxy]phenyl }-methanon-O-methyloxim.

### Als Beispiele für Bakterizide seien genannt:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
Abamectin, Acephat, Acrinathrin, Alanycarb, Aldicarb, Alphamethrin, Amitraz, Avermectin, AZ 60541, Azadirachtin, Azinphos A, Azinphos M, Azocyclotin,
Bacillus thuringiensis, 4-Bromo-2-(4-chlorphenyl)-1-(ethoxymethyl)-5-(trifluoromethyl)-1H-pyrrole-3-carbonitrile, Bendiocarb, Benfuracarb, Bensultap, Betacyfluthrin,
Bifenthrin, BPMC, Brofenprox, Bromophos A, Bufencarb, Buprofezin, Butocarboxin, Butylpyridaben,
Cadusafos, Carbaryl, Carbofuran, Carbophenothion, Carbosulfan, Cartap, Chloethocarb, Chloretoxyfos, Chlorfenvinphos, Chlorfluazuron, Chlormephos, N-[(6-Chloro-3-pyridinyl)-methyl]-N'-cyano-N-methyl-ethanimidamide, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin,
Deltamethrin, Demeton-M, Demeton-S, Demeton-S-methyl, Diafenthiuron, Diazinon, Dichlofenthion, Dichlorvos, Dicliphos, Dicrotophos, Diethion, Diflubenzuron, Dimethoat,
Dimethylvinphos, Dioxathion, Disulfoton,
Edifenphos, Emamectin, Esfenvalerat, Ethiofencarb, Ethion, Ethofenprox, Ethoprophos, Etrimphos,
Fenamiphos, Fenazaquin, Fenbutatinoxid, Fenitrothion, Fenobucarb, Fenothiocarb,
Fenoxycarb, Fenpropathrin, Fenpyrad, Fenpyroximat, Fenthion, Fenvalerate, Fipronil, Fluazinam, Fluazuron, Flucycloxuron, Flucythrinat, Flufenoxuron,
Flufenprox, Fluvalinate, Fonophos, Formothion, Fosthiazat, Fubfenprox, Furathiocarb,
HCH, Heptenophos, Hexaflumuron, Hexythiazox,
Imidacloprid, Iprobenfos, Isazophos, Isofenphos, Isoprocarb, Isoxathion, Ivermectin, Lambda-cyhalothrin, Lufenuron,
Malathion, Mecarbam, Mevinphos, Mesulfenphos, Metaldehyd, Methacrifos, Methamidophos, Methidathion, Methiocarb, Methomyl, Metolcarb, Milbemectin, Monocrotophos, Moxidectin,
Naled, NC 184, Nitenpyram,
Omethoat, Oxamyl, Oxydemethon M, Oxydeprofos,
Parathion A, Parathion M, Permethrin, Phenthoat, Phorat, Phosalon, Phosmet, Phosphamidon, Phoxim, Pirimicarb, Pirimiphos M, Pirimiphos A, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyrimidifen, Pyriproxifen,
Quinalphos,
Salithion, Sebufos, Silafluofen, Sulfotep, Sulprofos,
Tebufenozide, Tebufenpyrad, Tebupirimiphos, Teflubenzuron, Tefluthrin, Temephos, Terbam, Terbufos, Tetrachlorvinphos, Thiafenox, Thiamethoxam, Thiodicarb, Thiofanox, Thiomethon, Thionazin, Thuringiensin, Tralomethrin, Transfluthrin,
Triarathen, Triazophos, Triazuron, Trichlorfon, Triflumuron, Trimethacarb,
Vamidothion, XMC, Xylylcarb, Zetamethrin.

Als Beispiele für Herbizide seien genannt:

Anilide, wie z.B. Diflufenican und Propanil; Arylcarbonsäuren, wie z.B. Dichlorpicolinsäure, Dicamba und Picloram; Aryloxyalkansäuren, wie z.B. 2,4-D, 2,4-DB, 2,4-DP, Fluroxypyr, MCPA, MCPP und Triclopyr; Aryloxy-phenoxy-alkansäureester, wie z.B. Diclofop-methyl, Fenoxaprop-ethyl, Fluazifop-butyl, Haloxyfopmethyl und Quizalofop-ethyl; Azinone, wie z.B. Chloridazon und Norflurazon; Carbamate, wie z.B. Chlorpropham, Desmedipham, Phenmedipham und Propham; Chloracetanilide, wie z.B. Alachlor, Acetochlor, Butachlor, Metazachlor, Metolachlor, Pretilachlor und Propachlor; Dinitroaniline, wie z.B. Oryzalin, Pendimethalin und Trifluralin; Diphenylether, wie z.B. Acifluorfen, Bifenox, Fluoroglycofen, Fomesafen, Halosafen, Lactofen und Oxyfluorfen; Harnstoffe, wie z.B. Chlortoluron, Diuron, Fluometuron, Isoproturon, Linuron und Methabenzthiazuron; Hydroxylamine, wie z.B. Alloxydim, Clethodim, Cycloxydim, Sethoxydim und Tralkoxydim; Imidazolinone, wie z.B. Imazethapyr, Imazamethabenz, Imazapyr und Imazaquin; Nitrile, wie z.B. Bromoxynil, Dichlobenil und Ioxynil; Oxyacetamide, wie z.B. Mefenacet; Sulfonylharnstoffe, wie z.B. Amidosulfuron, Bensulfuron-methyl, Chlorimuron-ethyl, Chlorsulfuron, Cinosulfuron, Metsulfuron-methyl, Nicosulfuron, Primisulfuron, Pyrazosulfuron-ethyl, Thifensulfuron-methyl, Triasulfuron und Tribenuron-methyl; Thiolcarbamate, wie z.B. Butylate, Cycloate, Diallate, EPTC, Esprocarb, Molinate, Prosulfocarb, Thiobencarb und Triallate; Triazine, wie z.B. Atrazin, Cyanazin, Simazin, Simetryne, Terbutryne und Terbutylazin; Triazinone, wie z.B. Hexazinon, Metamitron und Metribuzin; Sonstige, wie z.B. Aminotriazol, 4-Amino-N-(1,1-dimetylethyl)-4,5-dihydro-3-(1-methylethyl)-5-oxo-1H-1,2,4-triazole-1-carboxamid, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Quinchlorac, Quinmerac, Sulphosate und Tridiphane.

Als Beispiele für Pflanzenwuchsregulatoren seien Chlorcholinchlorid und Ethephon genannt.

Als Beispiele für Pflanzennährstoffe seien übliche anorganische oder organische Dünger zur Versorgung von Pflanzen mit Makro- und/oder Mikronährstoffen genannt.

Als Beispiele für Repellents seien Diethyltolylamid, Ethylhexandiol und Butopyronoxyl genannt.

Als besonders bevorzugte Beispiele für Fungizide erwähnt seien die Wirkstoffe der Formeln 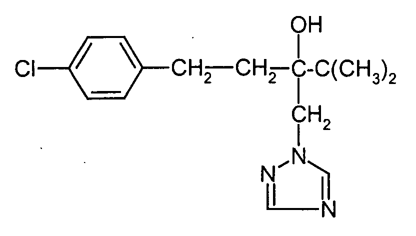 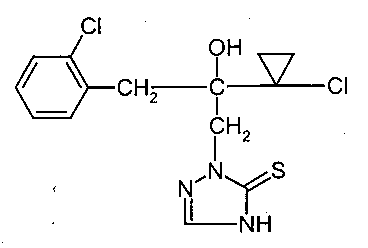 und

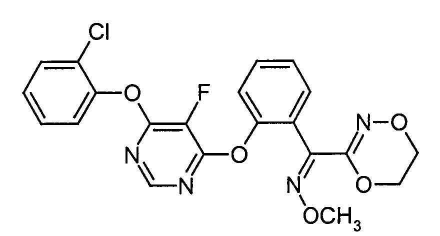

Weiterhin enthalten die erfindungsgemäßen Formulierungen mindestens eine der Verbindungen der allgemeinen Formel (I).

Als Zusatzstoffe, die in derartigen agrochemischen Formulierungen enthalten sein können, kommen alle üblichen Formulierhilfsmittel in Frage, wie z.B. organische Solventien, Emulgatoren, Dispergiermittel, Konservierungsmittel, Farbstoffe, Füllstoffe und auch Wasser.

Als organische Solventien kommen dabei alle üblichen organischen Lösungsmittel in Betracht, welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso®, Mineralöle, wie Testbenzin, Petroleum, Alkylbenzole und Spindelöl, weiterhin Tetrachlormethan, Chloroform, Methylenchlorid und Dichlormethan, außerdem Ester, wie Ethylacetat, ferner Lactone, wie Butyrolacton, außerdem Lactame, wie N-Methylpyrrolidon, N-Octylpyrrolidon und N-Methylcaprolactam, und auch Alkancarbonsäureamide, wie Decancarbonsäure-dimethylamid und Octancarbonsäure-dimethylamid, sowie Dimethylformamid.

Als Emulgatoren kommen übliche, in Formulierungen von agrochemischen Wirkstoffen vorhandene und von Verbindungen der allgemeinen Formel (I) verschiedene oberflächenaktive Substanzen in Frage. Beispielhaft genannt seien ethoxylierte Nonylphenole, Polyethylenglykolether von linearen Alkoholen, Umsetzungsprodukte von Alkylphenolen mit Ethylenoxid und/oder Propylenoxid, weiterhin Fettsäureester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate.

Als Dispergiermittel kommen alle üblicherweise in Pflanzenschutzmitteln für diesen Zweck eingesetzte und von Verbindungen der allgemeinen Formel (I) verschiedene Substanzen in Betracht. Vorzugsweise genannt seien natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Polymethacrylsäure und Co-Polymerisate aus (Meth)acrylsäure und (Meth)acrylsäureestern, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol® und Proxel®.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 5 µm, besonders bevorzugt von 0,02 bis 2 µm. Beispielhaft erwähnt seien Siliziumdioxid, sogenannte hochdisperse Kieselsäure, Kieselgele, sowie natürliche und synthetische Silikate und Alumosilikate.

Der Gehalt an den einzelnen Komponenten kann in den erfindungsgemäßen Formulierungen innerhalb eines größeren Bereiches variiert werden. So liegen die Konzentrationen
- an agrochemischen Wirkstoffen im Allgemeinen zwischen 1 und 90 Gew.-%, vorzugsweise zwischen 5 und 30 Gew.-%
- an Verbindungen der allgemeinen Formel (I) im Allgemeinen zwischen 1 und 90 Gew.-%, vorzugsweise zwischen 10 und 50 Gew.-% und
- an Zusatzstoffen im Allgemeinen zwischen 0 und 98 Gew.%, vorzugsweise zwischen 20 und 85 Gew.-%.

Die Herstellung der erfindungsgemäßen Formulierungen erfolgt in der Weise, dass man die Komponenten in den jeweils gewünschten Verhältnissen miteinander vermischt. Handelt es sich um einen agrochemischen Wirkstoff in Form einer Festsubstanz, so setzt man diesen im Allgemeinen entweder in fein gemahlener Form oder in Form einer Lösung oder Suspension in einem organischen Solvens ein. Ist der agrochemische Wirkstoff flüssig, so erübrigt sich häufig die Verwendung eines organischen Lösungsmittels. Es ist außerdem möglich, einen festen agrochemischen Wirkstoff in Form einer Schmelze einzusetzen.

Die Temperaturen können bei der Durchführung des erfindungsgemäßen Verfahrens in einem bestimmten Bereich variiert werden. Man arbeitet im Allgemeinen bei Temperaturen zwischen 0°C und 80°C, vorzugsweise zwischen 10°C und 60°C.

Bei der Durchführung des erfindungsgemäßen Verfahrens geht man im Allgemeinen so vor, dass man die Verbindung der allgemeinen Formel (I) mit einem oder mehreren Wirkstoffen sowie gegebenenfalls mit Zusatzstoffen unter Rühren intensiv vermischt. Die Reihenfolge, in der die Komponenten miteinander vermischt werden, ist beliebig. In einer bevorzugten Variante des erfindungsgemäßen Verfahrens geht man jedoch so vor, dass man die Verbindung der allgemeinen Formel (I) mit einem oder mehreren Wirkstoffen sowie mit weiteren Zusatzstoffen vermischt und die so entstehende Vormischung in Wasser dispergiert, so dass man Emulsionen, Suspensionen oder Lösungen erhält.

Zur Durchführung des erfindungsgemäßen Verfahrens kommen übliche Geräte in Betracht, die zur Herstellung derartiger Formulierungen eingesetzt werden.

Die erfindungsgemäßen Formulierungen können im Fall agrochemischer Wirkstoffe in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an derartigen agrochemischen Formulierungen kann innerhalb eines größeren Bereiches variiert werden. Sie richtet sich nach den jeweiligen agrochemischen Wirkstoffen und nach deren Gehalt in den Formulierungen.

Mit Hilfe der erfindungsgemäßen Formulierungen lassen sich agrochemische Wirkstoffe in besonders vorteilhafter Weise auf Pflanzen und/oder deren Lebensraum ausbringen. Dabei wird gute Dispergierung der Wirkstoffe erreicht, die Kristallisationsneigung fester Wirkstoffe wird herabgesetzt. Ferner weisen die erfindungsgemäßen Dispergiermittel eine gute biologische Abbaubarkeit auf, die ein wichtiges Kriterium für die Umweltverträglichkeit ist. Insbesondere gilt dies für agrochemische Formulierungen, da die Produkte während der Anwendung in den Boden gelangen und sich dort nicht anreichern sollten.

### Beispiele

### Herstellungsbeispiel 1

170,2 g p-Phenylphenol (1 mol) werden bei 170°C im Autoklaven 10 Minuten im Hochvakuum entwässert und dann bei 2,5 bar, 170°C mit 1320 g Ethylenoxid (30 mol) in Gegenwart von 1,7 g Kaliumhydroxid innerhalb von 10 Stunden umgesetzt. Das Endprodukt wird als wässrige Lösung ohne weitere Aufarbeitung als Dispergiermittel eingesetzt. Die Eigenschaften hinsichtlich der Bioabbaubarkeit und des Dispergiervermögens sind in der nachfolgenden Tabelle zusammengestellt.

### Herstellungsbeispiele 2 bis 4

Weitere Verbindungen der allgemeinen Formel (I) werden analog Beispiel 1 hergestellt. Dabei kann je nach Ausgangsprodukt die Reaktionstemperatur von 120°C bis 170°C und der Druck von 2,0 bis 4 bar variieren. Die Eigenschaften hinsichtlich der Bioabbaubarkeit und des Dispergiervermögens sind in der nachfolgenden Tabelle zusammengestellt. Der angewandte Dispergiermitteltest ist auch für das Dispergiervermögen der Verbindungen der Formel (I) gegenüber agrochemischen oder pharmazeutischen Substanzen aussagekräftig.

### Vergleichsbeispiele 1 und 2

Ethoxyliertes p-Phenylphenol (Beispiel 3 aus FR-A 2 472 627; 20 mol Äquivalent EO) beziehungsweise o-Phenylphenol (Beispiel 2 aus FR-A 2 472 627; 15 mol Äquivalent EO) werden hergestellt und den Beispielen 1 bzw. 2 gegenübergestellt. Überraschenderweise zeigten die erfindungsgemäßen Verbindungen einen deutlich höheren DF-Wert.

Die Dispersionseigenschaften wurden mit Hilfe eines nachfolgend beschriebenen Dispergiermitteltests bestimmt.

Die biologische Abbaubarkeit wurde mit einem Test nach OECD 301 A ISO 7827 (DIN 7827) gemessen (Messung der Abnahme des organisch gebundenen Kohlenstoffes).

Nach diesen Richtlinien gilt ein organischer Stoff als "leicht biologisch abbaubar" nach einem beliebigen Test OECD 301 A bis F, wenn der Abbau >60 % beträgt.

### Dispergiermitteltest

Es wurden 5.0 g Resolin Blau BBLS (C.I.Disperse blue 56), 10.0 g Natriumacetat (Trihydrat) mit entsalztemWasser auf 5000 ml aufgefüllt. Während des Verrührens wurde der pH-Wert mit Essigsäure auf 4,5 gestellt.

Aus dieser Farbstoff-Flotte wurden jeweils 100 ml zusammen mit 1 g/l des zu testenden Dispergiermittels eingesetzt. Die dabei erhaltene Flotte wurde anschließend auf dem Spectra Dye-Gerät (Becherfärbung) einem Färbeprogramm 120°C unterzogen. Danach wurde die Flotte über eine 5.5 cm Glas - Schlitzsieb - Nutsche (mit 3 Filterscheiben S&S - BF) abfiltriert.

Von der Flotte vor der Filtration und dem Filtrat wurden jeweils 1 ml entnommen und in 20 ml Aceton gelöst. Die in den acetonischen Lösungen enthaltenen Farbstoffmengen wurden im UV-VIS ausgewertet (1cm-Küvette, 610nm ). Als maßgebliche Größe gilt der Dispersionsfaktor (DF) = Extinktion Filtrat / Extinktion Ansatzflotte. Ein DF von 1 bedeutet ein sehr gutes Dispergiermittel, ein DF von 0 bedeutet ein unbrauchbares Dispergiermittel.

**Tabelle**

| | Phenolderivat der Formel (II) | Umsetzungsprodukt mit n mol-Äquivalent Ethylenoxid | Biologische Abbaubarkeit nach OECD 301 A | DF |
|---|---|---|---|---|
| Beispiel 1 | p-Phenylphenol | 30 | 94 % | 1,0 |
| Vergleich 1 | p-Phenylphenol | 20 | 98 % | 0,3 |
| Beispiel 2 | o-Phenylphenol | 26 | 67 % | 0,9 |
| Vergleich 2 | o-Phenylphenol | 15 | 67 % | 0,5 |
| Beispiel 3 | o-Cyclohexylphenol | 21 | 74 % | 0,9 |
| Beispiel 4 | p-Cyclohexylphenol | 21 | 68 % | 0,9 |

### Verwendungsbeispiel

Eine erfindungsgemäße Pflanzenschutz-Formulierung hat die folgende Zusammensetzung:

| | |
|---|---|
| 2,45 g | Tebuconazol |
| 3,50 g | des Dispergiermittels gemäß Beispiel 1 |
| 3,55 g | N-Methylcaprolactam. |

In Wasser entsteht eine feinteilige Emulsion, die als Spritzbrühe verwendet werden kann.

## Patentansprüche

1. Verwendung der Verbindungen der Formel (I) 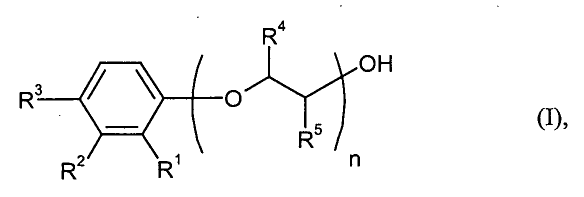 worin
R¹, R² und R³ unabhängig voneinander für Wasserstoff, Cyclohexyl oder Phenyl stehen, wobei wenigstens einer der Reste R¹ bis R³ ungleich Wasserstoff ist,
R⁴ und R⁵ unabhängig voneinander Methyl oder Wasserstoff bedeuten und
n eine Zahl von 21 bis 40 steht
als Dispergiermittel für pharmazeutische oder agrochemische Wirkstoffe.

2. Verwendung nach Anspruch 1, **dadurch gekennzeichnet, dass** in Formel (I) n für eine Zahl von 26 bis 35 steht.

3. Verwendung nach Anspruch 1, **dadurch gekennzeichnet, dass** in Formel (I) R³ für Phenyl steht.

4. Verwendung nach Anspruch 1, **dadurch gekennzeichnet, dass** in Formel (I) wenigstens einer der Reste R¹ bis R³ für Cyclohexyl steht und n für eine Zahl von 21 bis 40 steht.

5. Formulierungen enthaltend
a) mindestens einen pharmazeutischen oder agrochemischen Wirkstoff,
b) mindestens eine Verbindung der allgemeinen Formel (I), wobei R¹, R², R³, R⁴ und R⁵ sowie n die in Anspruch 1 genannten Bedeutungen besitzen, und
c) gegebenenfalls weiteren Zusatzstoffe.

6. Formulierung gemäß Anspruch 5, **dadurch gekennzeichnet, dass** als agrochemischer Wirkstoff die Verbindung der Formel 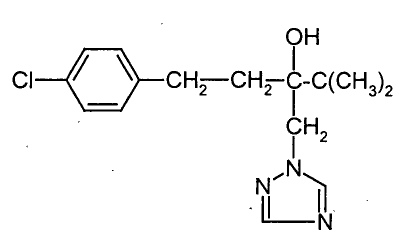 enthalten ist.

7. Formulierungen gemäß Anspruch 5, **dadurch gekennzeichnet, dass** als agrochemischer Wirkstoff die Verbindung der Formel 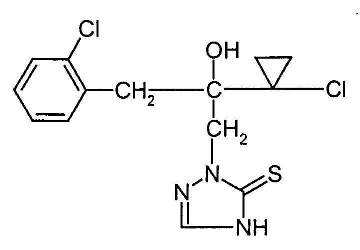 enthalten ist.

8. Formulierungen gemäß Anspruch 5, **dadurch gekennzeichnet, dass** als agrochemischer Wirkstoff die Verbindung der Formel 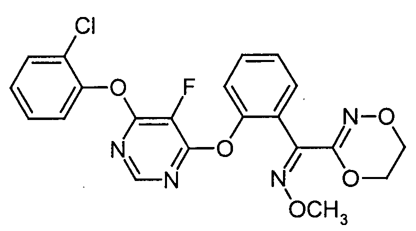 enthalten ist.

9. Verfahren zur Herstellung von Formulierungen gemäß Anspruch 5, **dadurch gekennzeichnet, dass** man
a) mindestens einen pharmazeutischen oder agrochemischen Wirkstoff
b) mit mindestens einer Verbindung der allgemeinen Formel (I) und
c) gegebenenfalls weiteren Zusatzstoffen
vermischt.

10. Verwendung von agrochemischen Formulierungen gemäß Anspruch 5 zur Applikation der enthaltenen agrochemischen Wirkstoffe auf Pflanzen und/oder deren Lebensraum.
